# EUROPÄISCHE PATENTSCHRIFT

(11) **EP 0 813 903 B1**
(45) Veröffentlichungstag und Bekanntmachung des Hinweises auf die Patenterteilung: **02.10.2002**
(21) Anmeldenummer: 97107260.8
(22) Anmeldetag: 02.05.1997
(51) Int. Cl.: C01B 3/32, H01M 8/06, B01J 8/02, B01J 8/04, B01J 8/06

(54) **Reformierungsreaktor, insbesondere zur Wasserdampfreformierung von Methanol**
Reforming reactor, in particular for steam reforming of methanol
Réacteur de reformage, en particulier pour le reformage à la vapeur d'eau de méthanol

(30) Priorität: 19.06.1996 DE 19624435
(43) Veröffentlichungstag der Anmeldung: 29.12.1997
(73) Patentinhaber: Ballard Power Systems AG, 73230 Kirchheim / Teck-Nabern (DE)
(72) Erfinder: Autenrieth, Rainer, 89155 Erbach (DE); Heil, Dietmar, 88477 Schwendi (DE)
(74) Vertreter: Kocher, Klaus-Peter, Dipl.-Phys.

(56) Entgegenhaltungen:
- EP-A- 0 326 661
- EP-A- 0 691 701
- DE-A- 2 942 359
- US-A- 5 401 589
- PATENT ABSTRACTS OF JAPAN vol. 013, no. 124 (C-580), 27. März 1989 (1989-03-27) & JP 63 295403 A (ASAHI ENG KK), 1. Dezember 1988 (1988-12-01)

## Beschreibung

Die Erfindung bezieht sich auf einen Reformierungsreaktor nach dem Oberbegriff des Anspruchs 1. Derartige Reformierungsreaktoren können beispielsweise zur Wasserdampfreformierung von Methanol zwecks Wasserstoffgewinnung in brennstoffzellenbetriebenen Fahrzeugen zum Einsatz kommen.

In der Patentschrift US 5.248.566 ist ein für den Einsatz in brennstoffzellenbetriebenen Kraftfahrzeugen geeigneter Reformierungsreaktor mit drei seriell angeordneten Reaktorstufen, von denen jede mit einem geeigneten Reformierungskatalysatormaterial beladen ist, beschrieben, bei dem die eingangsseitige Reaktorstufe durch Einbringen eines entsprechenden Katalysatormaterials zur partiellen Oxidation von Methanol ausgelegt ist, während die mittlere Reaktorstufe durch Einbringen eines anderen, geeigneten Katalysatormaterials zur Wasserdampfreformierung von Methanol eingerichtet ist. Die ausgangsseitige Reaktorstufe ist zur Bewirkung der Umwandlungsreaktion von Kohlenmonoxid in Kohlendioxid ausgelegt. Die zur Durchführung der endothermen Wasserdampfreformierungsreaktion in der mittleren Reaktorstufe notwendige Wärme wird von der eingangsseitigen Reaktorstufe durch die exotherme partielle Methanoloxidation erzeugt und mit dem zugehörigen Reaktionsgasstrom in die mittlere Reaktorstufe eingebracht.

In der Patentschrift US 5.401.589 ist ein dreistufiger Reformierungsreaktor zur Wasserdampfreformierung von Methanol offenbart, bei dem ein mit einer Katalysatorpelletschüttung gefüllter Reaktionsraum vorgesehen ist, der in drei untereinanderliegende Reaktorstufen dadurch unterteilt ist, dass diese Stufen auf unterschiedlichen Temperaturen gehalten werden, und zwar die eintrittsseitige Stufe auf ca. 300°C, die mittlere Stufe auf ca. 275°C und die ausgangsseitige Stufe auf ca. 225°C. Die Beheizung der drei Reaktorstufen erfolgt über eine wärmeleitfähige Trennwand, durch die diese Reaktorstufen mit unterschiedlicher Kontaktfläche in Wärmekontakt zu einem gemeinsamen Heizraum stehen.

In der Patentschrift US 3.522.019 ist ein Reformierungsreaktor der eingangs genannten Art offenbart, bei dem drei voneinander getrennte, mit Katalysatormaterial befüllte Reaktionsräume vorgesehen sind, von denen nur der mittleren Stufe eine externe Heizeinrichtung in Form eines Brenners zugeordnet ist. Die eingangsseitige Reaktorstufe ist über einen internen Wärmeaustauscher beheizbar, das zu diesem Zweck im Gegenstrom durch den Wärmetauscher hindurchgeführt wird. Die in der dritten Reaktorstufe entstehende Wärme wird in eine angeschlossene Wasserstoffreinigungseinheit eingekoppelt.

Ein in der Offenlegungsschrift EP 0 326 661 A1 offenbarter Reformierungsreaktor beinhaltet seriell hintereinandergeschaltet eine mehrstufige Primärdampfreformierungseinheit, eine Einheit zur partiellen Oxidation, eine Sekundärdampfreformierungseinheit und eine CO-Umwandlungseinheit. Dabei stehen eine erste Stufe der Primärdampfreformierungseinheit mit der CO-Umwandlungseinheit und eine zweite Stufe der Primärdampfreformierungseinheit mit der Sekundärdampfreformierungseinheit jeweils über eine gasdichte Trennwand in Wärmeaustauschverbindung.

Der Erfindung liegt als technisches Problem die Bereitstellung eines neuartigen, mit relativ geringem Aufwand realisierbaren und für mobile Anwendungen besonders geeigneten Reformierungsreaktors der eingangs genannten Art zugrunde.

Die Erfindung löst dieses Problem durch die Bereitstellung eines Reformierungsreaktors mit den Merkmalen des Anspruchs 1. Bei diesem Reaktor kann die eintrittsseitige Reaktorstufe unter Zuführung von Wärme aus der austrittsseitigen Reaktorstufe einen geringfügigen Teil des heißen, eintretenden Gasgemischs umsetzen, was die Konzentration der zu reformierenden Gaskomponenten zu Beginn der mittleren Reaktorstufe verringert. Dies erlaubt eine kleinere Bauform für die mittlere Stufe und eine geringere Alterung derselben durch die zu reagierenden Gasbestandteile. Gleichzeitig vermag die eintrittsseitige Reaktorstufe durch ihre Katalysatormaterialbeladung, vorzugsweise in Form einer Katalysatorpelletschüttung. Schwebepartikel auszufiltern, wodurch sich ein Heißgasfilter vor der mittleren Reaktorstufe erübrigen kann. Außerdem können von der eintrittsseitigen Reaktorstufe Wasser- und Methanoltropfen ausgefiltert werden, was dadurch bedingte Schädigungen des Katalysatormaterials in der für die Durchführung der Reformierungsreaktion wichtigen, mittleren Reaktorstufe verhindert. Dazu muss folglich keine Tropfenfreiheit im Eduktgasstrom gegeben sein, was wiederum einen einfacheren Aufbau eines der ersten Reaktorstufe vorgeschalteten Verdampfers erlaubt.

In der mittleren Reaktorstufe findet durch entsprechende Beheizung die hauptsächliche Reformierungsreaktion im dafür optimalen Temperaturbereich statt. Durch die fehlende Beheizung der dritten Reaktorstufe, die an die mittlere Reaktorstufe angrenzt oder direkt mit dieser über eine Verbindungsleitung verbunden ist, kann hier eine Umwandlungsreaktion stattfinden, mit der Kohlenmonoxid in Kohlendioxid umgewandelt wird, wodurch sich der Kohlenmonoxidanteil im Reaktionsgas herabsetzen lässt. Durch die Wärmekapazität der austrittsseitigen Reaktorstufe werden Temperaturschwankungen in der mittleren Reaktorstufe, wie sie bei Lastwechseln auftreten, gedämpft, so dass die mittlere Reaktorstufe bei kleinem Bauvolumen mit höheren Temperaturen und größeren Temperaturschwankungen betrieben werden kann. Neben Schwankungen der Gasaustrittstemperatur werden durch die austrittsseitige Reaktorstufe auch Schwankungen des Kohlenmonoxidgehaltes im Reaktionsgas bei Lastwechseln verringert. Durch die Wärmekopplung der eintrittsseitigen mit der austrittsseitigen Reaktorstufe wird ein selbstregelnder Wärmeübertragungsmechanismus bei Lastwechseln realisiert, wobei die geringeren Ein- und Austrittstemperaturen des Gasgemischs einen höheren Wirkungsgrad ermöglichen.

Charakteristischerweise stehen die eintrittsseitige und die austrittsseitige Reaktorstufe über eine wärmeleitfähige Trennwand miteinander in Wärmeaustauschverbindung, oder sie sind räumlich voneinander separiert und stehen dadurch in Wärmeaustauschverbindung, dass der aus der austrittsseitigen Reaktorstufe austretende Reaktionsgasstrom durch einen mit der eintrittsseitigen Reaktorstufe in Wärmekontakt stehende Temperierraum hindurchgeleitet wird.

Bei einem nach Anspruch 2 weitergebildeten Reformierungsreaktor bilden die eintrittsseitige und die austrittsseitige Reaktorstufe zusammen eine eigenständige, von der mittleren Reaktorstufe räumlich separierte Wärmeübertragereinheit. Damit kann beispielsweise ein bislang einstufiger Reformierungsreaktor mittels einfacher Nachrüstung mit dieser Wärmeübertragereinheit in einen dreistufigen Reformierungsreaktor aufgerüstet werden.

Bevorzugte Ausführungsformen der Erfindung sind in den Zeichnungen dargestellt und werden nachfolgend beschrieben. Hierbei zeigen:
- Fig. 1: eine blockdiagrammatische Darstellung eines dreistufigen Reformierungsreaktors mit aneinandergrenzenden Reaktorstufen,
- Fig. 2: eine blockdiagrammatische Darstellung eines dreistufigen Reformierungsreaktors mit von der eintrittsseitigen räumlich separierter austrittsseitiger Reaktorstufe und
- Fig. 3: eine blockdiagrammatische Darstellung eines dreistufigen Reformierungsreaktors mit von der mittleren Reaktorstufe separierter, die eintrittsseitige und die austrittsseitige Reaktorstufe enthaltender Wärmeübertragereinheit.

Die in den Figuren nur mit ihrem hier interessierenden Aufbau des Reaktorteils dargestellten Reformierungsreaktoren eignen sich beispielsweise zum Einsatz in einem brennstoffzellenbetriebenen Kraftfahrzeug, um mittels Wasserdampfreformierung von Methanol Wasserstoff für die Speisung der Brennstoffzellen zu gewinnen. Allen dargestellten Reaktoren ist gemeinsam, daß sie drei seriell angeordnete Reaktorstufen beinhalten, von denen die eintrittsseitige Stufe in Wärmeaustauschverbindung mit der austrittsseitigen Stufe steht, wobei diesen beiden Stufen keine externe Heizeinrichtung zugeordnet ist, während dies für die mittlere Reaktorstufe vorgesehen ist. Alle drei Reaktorstufen sind jeweils mit dem gleichen Katalysatormaterial, vorzugsweise in Form einer Katalysatorpelletschüttung, beladen, das je nach der durchzuführenden Reformierungsreaktion ausgewählt ist. Zur Wasserdampfreformierung von Methanol eignet sich z.B. ein CuO/ZnO/Al₂O₃-Katalysatormaterial.

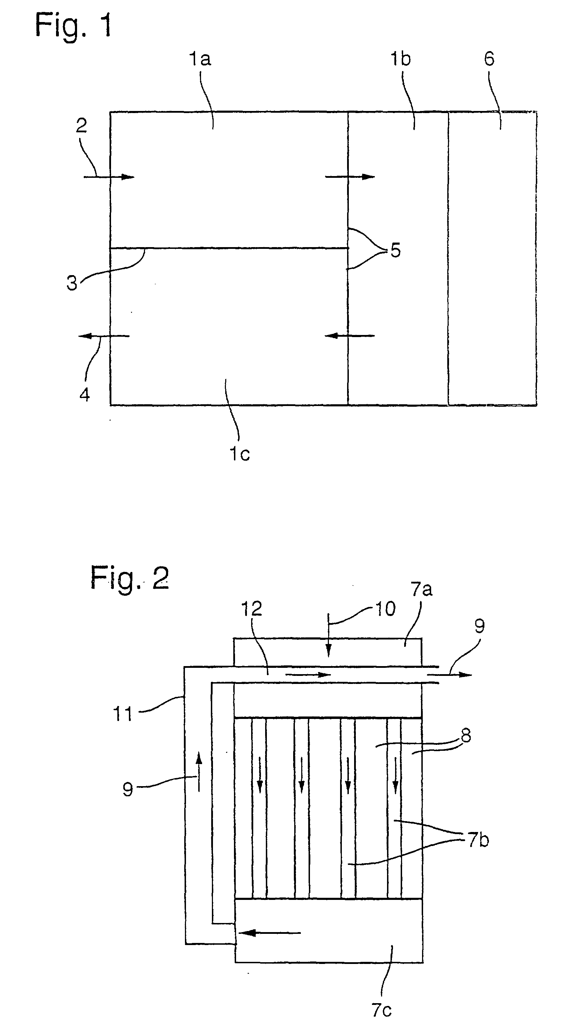

Bei dem in Fig. 1 gezeigten Reformierungsreaktor steht die eintrittsseitige Reaktorstufe (1a), in welche das zu reagierende Gasgemisch (2) als Eduktgasstrom eintritt, über eine hoch wärmeleitfähige, gasdichte Trennwand (3) in Wärmekontakt mit der angrenzend angeordneten, ausgangsseitigen Reaktorstufe (1c), aus welcher das Reaktionsgas (4) austritt. Durch eine seitliche, gasdurchlässige Trennwand (5) getrennt grenzt die mittlere Reaktorstufe (1b) einerseits an die Ausgangsseite der eintrittsseitigen Reaktorstufe (1a) und andererseits an die Eingangsseite der austrittsseitigen Reaktorstufe (1c) an, so daß der hindurchgeführte Gasstrom in der mittleren Reaktorstufe (1b) U-förmig umgelenkt wird. An der dem Komplex aus eintrittsseitiger (1a) und austrittsseitiger Reaktorstufe (1c) gegenüberliegenden Seite der mittleren Reaktorstufe (1b) schließt sich eine Heizeinrichtung (6) an, welche die mittlere Reaktorstufe (1b) auf einer zur Durchführung der gewünschten Reformierungsreaktion optimalen, erhöhten Temperatur hält.

Im Fall der Wasserdampfreformierung von Methanol ergibt sich folgende Betriebsweise für den solchermaßen aufgebauten Reformierungsreaktor. Das in die eintrittsseitige Reaktorstufe (1a) eintretende Methanol/Wasserdampf-Gemisch (2) wird in der eintrittsseitigen Reaktorstufe (1a) zu einem geringen Anteil reformiert, wobei der eintrittsseitigen Reaktorstufe (1a) über die Trennwand (3) Wärme von der austrittsseitigen Reaktorstufe (1c) zugeführt wird. Die eintrittsseitige Reaktorstufe (1a) filtert gleichzeitig Schwebepartikel sowie Wasser- und Methanoltropfen aus dem eintretenden Gasgemisch (2) aus, so daß kein Heißgasfilter vor der mittleren Reaktionsstufe (1b) nötig ist und das dort vorhandene Katalysatormaterial keine merkliche Schädigung und Alterung seiner katalytischen Eigenschaft erfährt. Außerdem vereinfacht dies den Aufbau eines der eintrittsseitigen Reaktorstufe (1a) vorgeschalteten Verdampfers, da dieser nicht auf Tropfenfreiheit im Eduktgasstrom ausgelegt sein muß. Das nur teilweise umgesetzte Gasgemisch tritt dann über die gasdurchlässige Trennwand (5) in die mittlere Reaktorstufe (1b) ein, die den hauptsächlichen Reformierungsreaktionsumsatz bewirkt und dazu von der Heizeinrichtung (6) auf einer geeigneten Temperatur zwischen 280° C und 350° C gehalten wird.

Das durch die Reformierungsreaktion erhaltene Reakcionsgas gelanat dann wiederum über die gasdurchlässige Trennwand (5) in die austrittsseitige Reaktorstufe (1c), deren Temperatur aufgrund fehlender äußerer Beheizung unterhalb von 280° C liegt und die dadurch eine Umwandlungsreaktion ermöglicht, mit welcher Kohlenmonoxid wenigstens teilweise in Kohlendioxid umgewandelt werden kann. Auf diese Weise wird am Ausgang dieser austrittsseitigen Reaktorstufe (1c) ein wasserstoffreiches Reaktionsgas mit sehr geringer Kohlenmonoxidkonzentration erhalten. Die bei dieser exothermen Umwandlungsreaktion frei werdende Wärme wird über die wärmeleitfähige, gasdichte Trennwand (3) auf die eingangsseitige Reaktorstufe (1a) übertragen. Die Wärmekapazität der dritten Reaktorstufe (1c) dämpft zudem Temperaturschwankungen in der mittleren Reaktorstufe (1b), die bei Lastwechseln auftreten können, wie sie beispielsweise beim Einsatz in Kraftfahrzeugen im Fahrbetrieb erfolgen. Durch die CO-Umwandlungsfunktion der austrittsseitigen Reaktorstufe (1c) kann die mittlere Reaktorstufe (1b) bei vergleichsweise geringem Bauvolumen mit höheren Temperaturen und größeren Temperaturschwankungen betrieben werden. Die austrittsseitige Reaktorstufe (1c) gewährleistet, daß die Schwankungen der CO-Konzentration und der Gasaustrittstemperatur bei Lastwechseln sehr gering bleiben.

Durch den Wärmekontakt zwischen der eintrittsseitigen (1a) und der austrittsseitigen Reaktorstufe (1c) über die hoch wärmeleitfähige Trennwand (3) ist ein unter Lastwechsel selbstregelnder Wärmeübertragungsmechanismus realisiert, und die relativ geringen Gaseintritts- und Gasaustrittstemperaturen führen zu einem vergleichsweise hohen Wirkungsgrad des Reaktors. Insgesamt ergibt sich damit ein einfacher und kompakter Aufbau des Reformierungsreaktors mit hoher Unempfindlichkeit gegenüber Temperaturschwankungen bei Lastwechsel und mit hohem energetischem Wirkungsgrad.

Wenn der Reaktor so positioniert wird, daß die eintrittsseitige (1a) und/oder die austrittsseitige Reaktorstufe (1c) über der mittleren Reaktorstufe (1b) liegen, kann zudem eine automatische Auffüllfunktion mit Katalysatormaterial für die mittlere Reaktorstufe (1b) realisiert werden. Dies ist beispielsweise beim Einsatz in einem Kraftfahrzeug zweckmäßig, wo durch Erschütterungen während des Fahrbetriebs Setzerscheinungen der Katalysatorpelletschüttung auftreten können. Dazu braucht dann nur die gasdurchlässige Trennwand (5) so ausgelegt sein, daß auch Katalysatorpellets unter Wirkung der Schwerkraft hindurchtreten können. Bei auftretenden Setzerscheinungen in der mittleren Reaktorstufe (1b) kann dann Katalysatormaterial automatisch aus der eintrittsseitigen (1a) und/oder der austrittsseitigen Reaktorstufe (1c) in die mittlere Reaktorstufe (1b) nachrutschen.

Der in Fig. 2 gezeigte Reformierungsreaktor ist gegenüber demjenigen von Fig. 1 vor allem durch eine räumliche Trennung von eintrittsseitiger Reaktorstufe (7a) und austrittsseitiger Reaktorstufe (7c) modifiziert. Zwischen der eintrittsseitigen (7a) und der austrittsseitigen Reaktorstufe (7c), die beide als einteilige, katalysatorbeladene Räume realisiert sind, befindet sich als mittlere Reaktorstufe (7b) ein Reaktorrohrbündel aus mehreren, katalysatorbeladenen Reaktorrohren. Zur Beheizung die ser mittleren Reaktorstufe (7b) durchqueren die Reaktorrohre einen von der eintrittsseitigen (7a) und der austrittsseitigen Reaktorstufe (7c) sowie von seitlichen Gehäusewandungen eingeschlossenen Heizraum (8), der von einem Heizfluid geeigneter Temperatur durchströmt wird, um die Temperatur in den Reaktionsrohren in dem für die Durchführung der Reformierungsreaktion geeigneten Temperaturbereich zu halten. Wenn der Reaktor, wie gezeigt, mit im wesentlichen vertikal verlaufenden Reaktorrohren betrieben wird, ergibt sich wiederum eine automatische Katalysatornachfüllfunktion, indem bei Setzerscheinungen der Katalysatorfüllung Katalysatormaterial aus der oberen, eintrittsseitigen Reaktorstufe (7a) in die Rohre des Reaktorrohrbündels (7b) nachrutschen kann.

Zur Realisierung der Wärmeaustauschverbindung zwischeneintrittsseitiger (7a) und austrittsseitiger Reaktorstufe (7c) wird der aus der austrittsseitigen Reaktorstufe (7c) austretende Reaktionsgasstrom (9) über eine zugehörige Zuleitung (11) in einen Temperierraum (12) eingeleitet, der in Wärmekontakt mit der ersten Reaktorstufe (7a) steht. Im gezeigten Fall besteht dieser Temperierraum (12) einfach aus einem, alternativ auch mehreren, quer durch die eintrittsseitige Reaktorstufe (7a) hindurchgeführten Rohren, an deren Austritt dann das Reaktionsgas (9) entnommen werden kann.

Die Funktionsweise dieses Reaktors zur Gewinnung eines wasserstoffreichen, kohlenmonoxidarmen Reaktionsgases (9) aus dem eintretenden Gasgemisch (10) mittels Wasserdampfreformierung von Methanol zu einem geringeren Teil in der eintrittsseitigen Reaktorstufe (7a) und zum hauptsächlichen Teil in der mittleren Reaktorstufe (7b) entspricht derjenigen des Reaktors von Fig. 1, worauf verwiesen werden kann. Lediglich die Übertragung der durch die CO-Umwandlungsreaktion in der ausstrittsseitigen Reaktorstufe (7c) erzeugten Wärme zur eintrittsseitigen Reaktorstufe (7a) ist dahingehend modifiziert, daß dies über das Reaktionsgas (9) erfolgt, das zu diesem Zweck vom Ausgang der austrittsseitigen Reaktorstufe (7c) zur eintrittsseitigen Reaktorstufe (7a) und durch diese hindurch geführt wird.

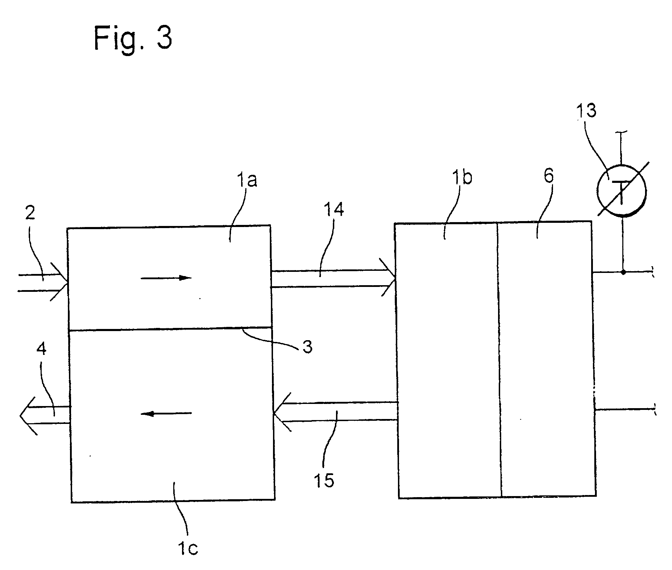

Der in Fig. 3 gezeigte Reformierungsreaktor entspricht in Aufbau und Funktionsweise im wesentlichen demjenigen von Fig. 1, wobei für funktionell äquivalente Komponenten gleiche Bezugszeichen verwendet sind. Im Unterschied zum Reaktor von Fig. 1 grenzt die mittlere Reaktorstufe (1b) beim Reaktor von Fig. 3 jedoch nicht direkt über eine Trennwand an die eintrittsseitige (1a) und die austrittsseitige Reaktorstufe (1c) an, sondern ist von diesen räumlich getrennt. Dabei führt eine erste Gasverbindungsleitung (14) vom Ausgang der eintrittsseitigen Reaktorstufe (1a) zum Eingang der mittleren Reaktorstufe (1b) und eine zweite Gasverbindungsleitung (15) vom Ausgang der mittleren Reaktorstufe (1b) zum Eingang der austrittsseitigen Reaktorstufe (1c). An die mittlere Reaktorstufe (1b) ist wiederum die Heizeinrichtung (6) angekoppelt, die ein Temperaturstellglied (13) beinhaltet, das von einer nicht gezeigten Heizregelung angesteuert wird.

Die eintrittsseitige (1a) und die austrittsseitige Reaktorstufe (1c) grenzen über die hoch wärmeleitfähige, gasdichte Trennwand (3) aneinander an und bilden auf diese Weise eine von der mittleren Reaktorstufe (1b) räumlich separierte Wärmeübertragereinheit. Diese räumliche Entkopplung der eintrittsseitigen (1a) und der austrittsseitigen Reaktorstufe (1c) von der mittleren, die hauptsächliche Reformierungsreaktion durchführenden und zu diesem Zweck extern beheizbaren Reaktorstufe (1b) erlaubt eine einfache Nachrüstung einstufiger Reformierungsreaktoren. Der bereits vorhandene Reaktorteil wird dann als die mittlere Reaktorstufe (1b) benutzt, an welche der Zusatzreformer in Form der Wärmeübertragereinheit aus eintrittsseitiger (1a) und austrittsseitiger Reaktorstufe (1c) über die Gasverbindungsleitungen (14, 15) angeschlossen wird. Bei diesem Zusatzreformerbauteil handelt es sich um ein passives Bauelement ohne anzuschließende Reaelungs- und Heizungskomponenten, was die Nachrüstung besonders einfach macht. Im übrigen entspricht die Funktionsweise dieses Reaktors völlig derjenigen des Reaktors von Fig. 1.

Es versteht sich, daß erfindungsgemäße Reformierungsreaktoren, wie diejenigen der beschriebenen Beispiele, nicht nur zur Wasserdampfreformierung von Methanol, sondern für die Durchführung jeglicher Reformierungsreaktion verwendet werden können, bei denen die Reformierung mit drei Reaktorstufen durchgeführt wird, von denen nur die mittlere Stufe extern beheizt wird, während die beiden anderen in Wärmeaustauschverbindung miteinander stehen.

## Patentansprüche

1. Reformierungsreaktor, insbesondere zur Wasserdampfreformierung von Methanol, mit
- drei seriell angeordneten Reaktorstufen, von denen jede mit Katalysatormaterial beladen ist, wobei
- nur der mittleren Reaktorstufe (1b) eine Heizeinrichtung (6) zugeordnet ist,
**dadurch gekennzeichnet, dass**
- die austrittsseitige Reaktorstufe (1c) an die mittlere Reaktorstufe (1b) angrenzt oder direkt mit dieser über eine Verbindungsleitung (15) verbunden ist und
- die eintrittsseitige Reaktorstufe (1a) und die austrittsseitige Reaktorstufe (1c) über eine wärmeleitfähige Trennwand (3) in Wärmeaustauschverbindung stehen oder räumlich voneinander separiert sind und dadurch in Wärmeaustauschverbindung stehen, dass der aus der austrittsseitigen Reaktorstufe austretende Reaktionsgasstrom (9) durch einen mit der eintrittsseitigen Reaktorstufe in Wärmekontakt stehenden Temperierraum (12) hindurchgeleitet wird.

2. Reformierungsreaktor nach Anspruch 1, weiter
**dadurch gekennzeichnet, daß**
die eintrittsseitige Reaktorstufe (1a) und die austrittsseitige Reaktorstufe (1c) zusammen eine eigenständige, von der mittleren Reaktorstufe (1b) räumlich separierte Wärmeübertragereinheit bilden.

## Claims

1. A reforming reactor, in particular for the steam reforming of methanol, with
- three serially arranged reactor stages, each of which is charged with catalyst material, with
- a heating system (6) being assigned to only the central reactor stage (1b),
**characterised in that**
- the outlet side reactor stage (1c) adjoins the central reactor stage (1b) or is connected thereto via a connecting line (15) and
- the inlet side reactor stage (1a) and the outlet side reactor stage (1c) are connected to one another in a heat-exchanging relationship via a heat conductive separating wall (3) or spatially separated from one another and thereby connected to each other in a heat exchanging relationship, and the reaction gas flow (9) emerging from the outlet side reactor stage is guided through a temperature equalisation chamber (12) in heat contact with the inlet side reactor stage.

2. A reforming reactor in accordance with claim 1, further
**characterised in that**
the inlet side reactor stage (1a) and the outlet side reactor stage (1c) together form an autonomous heat transfer unit which is spatially separated from the central reactor stage (1b).

## Revendications

1. Réacteur de reformage, notamment pour le reformage de méthanol à la vapeur d'eau, comportant
- trois étages de réacteur disposés en série et dont chacun est chargé par un matériau formant catalyseur,
- seul l'étage médian (1b) du réacteur du dispositif de chauffage (6) étant associé uniquement à l'étage médian (1b) du réacteur,
**caractérisé en ce que**
- l'étage côté sortie (1c) du réacteur jouxte l'étage médian (1b) du réacteur ou est relié directement à ce dernier par l'intermédiaire d'une canalisation de liaison (15), et
- l'étage côté entrée (la) du réacteur et l'étage côté sortie (1c) du réacteur sont reliés selon une liaison d'échange thermique par une paroi de séparation ou sont séparés l'un de l'autre par une paroi de séparation thermoconducteur (3), établissent entre eux une liaison d'échange thermique par l'intermédiaire d'une paroi de séparation thermoconductrice (1) ou sont séparés l'un de l'autre spatialement et établissent une liaison d'échange thermique par le fait que le courant de gaz réactif (9) qui sort de l'étage du réacteur situé côté sortie traverse une chambre de mise en température (12) qui est placée en contact thermique avec l'étage situé côté entrée du réacteur

2. Réacteur de reformage selon la revendication 1,
**caractérisé en ce qu'**en outre l'étage situé côté entrée (1a) du réacteur et l'étage situé côté sortie (1c) du réacteur forment conjointement une unité de transformateur thermique indépendante, qui est séparée spatialement de l'étage médian (1b) du réacteur.
